(19) Europäisches Patentamt
European Patent Office
Office européen des brevets

(11) **EP 4 166 453 B1**

(12) **EUROPEAN PATENT SPECIFICATION**

(45) Date of publication and mention
of the grant of the patent:
**17.07.2024 Bulletin 2024/29**

(51) International Patent Classification (IPC):
***B64D 27/24*** *(2024.01)*   ***B64C 11/44*** *(2006.01)*
***B64C 11/30*** *(2006.01)*   ***B64D 27/02*** *(2006.01)*

(21) Application number: **22195762.4**

(22) Date of filing: **15.09.2022**

(52) Cooperative Patent Classification (CPC):
**B64D 27/24; B64C 11/303; B64C 11/305;
B64C 11/44; B64D 27/026; B64D 31/06;**
B64D 2221/00; Y02T 50/60

(54) **AIRCRAFT ELECTRIC PROPULSION SYSTEM CONTROL METHOD**

STEUERVERFAHREN FÜR EIN ELEKTRISCHES FLUGZEUGANTRIEBSSYSTEM

PROCÉDÉ DE COMMANDE DE SYSTÈME DE PROPULSION ÉLECTRIQUE D'AÉRONEF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.10.2021 GB 202114747**

(43) Date of publication of application:
**19.04.2023 Bulletin 2023/16**

(73) Proprietor: **Rolls-Royce plc
London N1 9FX (GB)**

(72) Inventor: **Grzedzinski, Kacper Jakub
Derby, DE24 8BJ (GB)**

(74) Representative: **Rolls-Royce plc
Moor Lane (ML-9)
PO Box 31
Derby DE24 8BJ (GB)**

(56) References cited:
EP-A1- 2 691 297     EP-B1- 2 691 297
WO-A1-2020/240567    WO-A2-2014/158240
US-A1- 2020 140 062  US-B1- 11 128 251

**Description**

The present disclosure concerns a method of controlling an aircraft electric propulsion system, a controller configured to control an aircraft propulsion system in accordance with the method, and a propulsion system incorporating the control system.

Electric propulsion systems have been proposed for aircraft, in which one or more electric motors drives one or more propulsors for provided thrust.

International patent application WO 2014158240 discloses a control scheme for a hybrid turbo electric aero-propulsion system which prioritizes and optimizes the operating parameters according to a desired optimization objective, for and across a number of different control optimization subsystems of the hybrid turbo electric aero-propulsion system. The control subsystems may include, for example, a propulsion control optimization subsystem and a power plant control optimization subsystem. The optimizations may be based on a system model, which is developed and updated during the operation of the hybrid turbo electric aero-propulsion system.

United States patent application US 2020140062 discloses a propulsion system for a vehicle comprising at least one propeller and at least one ducted fan. Each of the propellers is mounted on a respective duct of the ducted fan's outer perimeter and is adapted to be driven by a first electric motor. Each of the ducted fans is mounted within the duct and is adapted to be driven by a second electric motor. The rotation speeds and the blade pitch angles of the propellers and of the fans are controllable to achieve optimized efficiency of the propulsion unit, reduction of the noise of the system and minimization of combined torque of the system on the vehicle, by independently controlling the ducted fan RPM, the propeller RPM, and the propeller blades pitch angle.

International patent application WO 2020240567 discloses a system for propelling a vehicle which includes at least one thrust producer with an electrical motor, a variable pitch propeller powered by the electrical motor and a controller. The controller is configured to provide control signals to control motor throttle and pitch angle of a thrust producer based on a momentary thrust of the thrust producer, a momentary pitch angle of the variable pitch propeller and a requested thrust. The requested thrust is based on input from any one of a human operator of the vehicle and an avionic system of the vehicle.

United States patent application US 11128251 discloses a fault-tolerant power system architecture for aircraft electric propulsion. The fault-tolerant systems continue to operate in the event of the failure of (or one or more faults within) some component. The fault-tolerant design enables the system to continue its intended operation, possibly at a reduced level, rather than failing completely, when some part of the system fails. When a turn-to-turn fault in an AC motor is detected, a motor controller will short three top or three bottom switches in the inverter together (effectively shorting the associated stator windings) to divert fault current from the motor windings to the motor controller, where cooling is available. Also, when a fault in or at the input to a motor controller is detected, the motor controller cuts off power to the motor by issuing a command that causes an upstream contactor with high-voltage DC bus input to open.

European patent application EP 2691297 discloses a method of and apparatus for operating a propeller. The method comprises measuring a value of a property of the fluid (e.g. a parameter related to the density of the fluid); measuring a value of a parameter, the parameter related to one or more forces applied to the propeller (e.g. a torque applied to the propeller) or derived at least in part from the action of the propeller (e.g. a thrust produced by the action of the propeller, a drag produced by the action of the propeller, or a velocity produced by the action of the propeller); and controlling the propeller depending on a function of the measured value of the property of the fluid and the measured value of parameter. The propeller may be a propeller on an aircraft.

According to a first aspect there is provided a method of controlling an electric propulsion system of an aircraft according to claim 1.

According to a second aspect of the invention there is provided a control system according to claim 9.

According to a third aspect there is provided an aircraft propulsion system comprising a control system in accordance with the second aspect.

According to a fourth aspect there is provided an aircraft comprising a propulsion system in accordance with the third aspect.

Optional embodiments are defined by the dependent claims.

The skilled person will appreciate that except where mutually exclusive, a feature described in relation to any one of the above aspects may be applied mutatis mutandis to any other aspect, as long as they fall within the scope of the appended claims. Furthermore except where mutually exclusive any feature described herein may be applied to any aspect and/or combined with any other feature described herein, as long as they fall within the scope of the appended claims.

An embodiment will now be described by way of example only, with reference to the Figures, in which:

Figure 1 is a plan view of a first aircraft comprising an electric propulsion system;

**Figure 2** is a schematic diagram of an electric propulsion system for the aircraft of figure 1;

**Figure 3** is a graph showing an efficiency map for an inverter and motor combination of the electric propulsion system of figure 2 as a function of torque and motor rotational speeds;

**Figure 4** is a graph showing an efficiency map for a propeller of the electric propulsion system of figure 2 as a function of coefficient of power and advance ratio;

**Figure 5** is a graph illustrating modified coefficient of thrust $C'_T$ as a function of coefficient of power and advance ratio;

**Figure 6** is a flow diagram illustrating a method of calculating an online model or look-up table correlating airspeed and desired thrust with a maximally efficient propulsion system configuration; and

**Figure 7** is a flow diagram illustrating a method of control of the electric propulsion system of figure 2 according to the look-up table or model calculating in accordance with the method of figure 6.

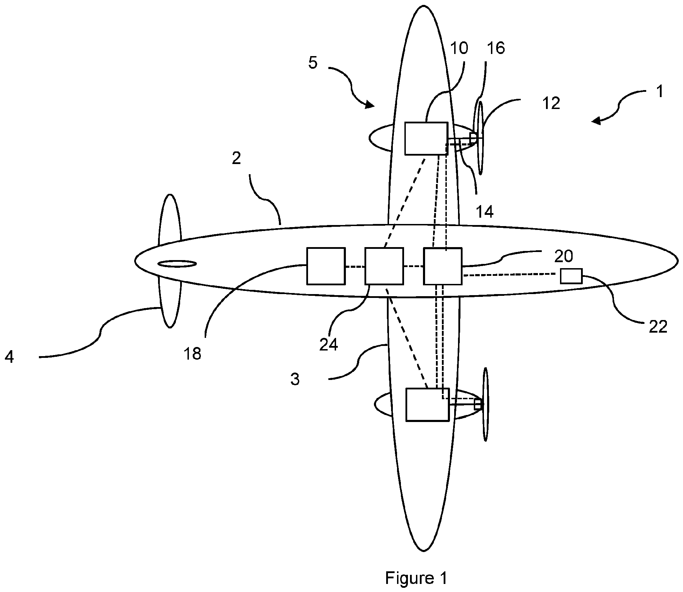

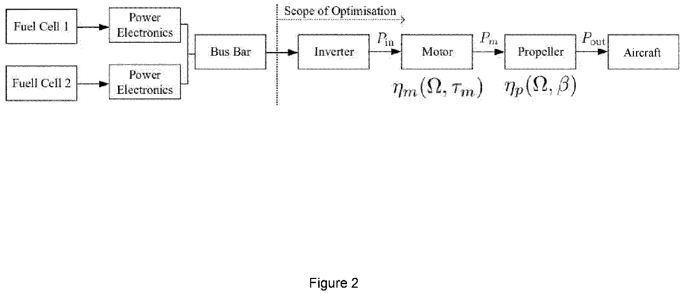

With reference to Figure 1, an aircraft 1 is shown. The aircraft is of conventional configuration, having a fuselage 2, wings 3, tail 4 and an electric propulsion system 5. Indeed, in some embodiments, the aircraft 1 is an existing airframe which has been adapted for electric propulsion. The propulsion system is shown schematically in more detail in figure 2.

The propulsion system 5 comprises a propulsion unit on each wing comprising an electric motor 10 mechanically coupled to a propulsor in the form of a propeller 12 via a shaft 14 and propeller pitch change mechanism 16. As will be appreciated, other forms of propulsor such as ducted fans could also be used. The propeller 12 and pitch change mechanism 16 are of conventional construction. The propeller pitch change mechanism 16 is configured to alter the pitch of the blades of the propeller 12 (i.e. to change the angle of attack of the blades relative to the oncoming airstream) during flight. In some cases, a reduction gearbox (not shown) may be provided between the shaft 14 and propeller 12, which is configured to reduce the speed of the propeller 12 relative to the motor 10. In other cases, the motor 10 is directly coupled to the propeller 12 via the shaft 14.

The propulsion system 5 is powered by an energy storage system 18. In the present embodiment, the energy storage system is a hydrogen fuel cell, though other energy storage technologies such as chemical batteries or capacitors could be used instead of or in addition to one or more fuel cells. The energy storage system produces electrical power in the form of Direct Current (DC). In some instances, this DC current may be converted to an AC current by one or more power electronics systems 24 in the form of one or more inverters, provided between the energy storage system 18 and motors 10.

Figure 2 illustrates the power conversion chain from the energy storage unit 18 to the propeller 12. Energy is provided from one or more energy storage units (fuel cell 1 and 2 in figure 2), which is provided via power electronics in the form of battery controllers to a main DC bus bar. Power from the main DC bus bar is converted to AC power at the required frequency, voltage and current by inverters to respective motors. The motors drive respective propellers, to provide propulsive thrust to the aircraft.

Referring again to figure 1, the propulsion system 5 is controlled by a controller 20. The controller 20 is in signal communication with the energy storage unit 18, motors 10 and propeller pitch change mechanism 16 and a flight control system 22, and is configured to control at least the motor 10 and pitch change mechanism 16 in response to control inputs from the flight control system 22.

The controller 20 is typically a digital electronic control system comprising a memory, processing unit and input / outputs, and is of conventional construction. The controller 20 comprises control software comprising a look-up table or look-up tables. The look-up table is configured to take inputs in the form of at least a thrust demand from the flight control system and one or more flight parameters, such as true or equivalent air speed from an air data system, and correlate these inputs to a corresponding target motor / propeller target parameter pair which provides an optimum (i.e. a computed highest possible) efficiency of the propeller 12 / motor 10 combination. These parameter pairs comprise either (in an unclaimed embodiment) a corresponding target motor speed $\Omega_m$ and target pitch angle $\beta$ for the pitch change mechanism 16 for the associated propeller 12, or (in the claimed invention) a corresponding governor speed set-point $\Omega_p$ and target motor torque $\tau_m$ for the motors 10, as shown in the below table:

|  | Parameter pair 1 | Parameter pair 2 |
|---|---|---|
| Propeller | Pitch Angle $\beta$ | Governor speed $\Omega_p$ |
| Motor | Motor Speed $\Omega_m$ | Motor Torque $\tau_m$ |

Each parameter pair represents two degrees of freedom that can be controlled to provide the necessary thrust. For steady state operation of the propulsion system, both options are equally valid and are broadly equivalent - the optimum efficiency can be achieved using either option for a given flight condition. There are however advantages and disadvantages of controlling the system in accordance with each of these methods.

An advantage of using parameter pair 2 (governor speed $\Omega_p$ and motor torque $\tau_m$), is that, when installing the system on an existing airframe, the existing propeller speed governor can be utilised without adapting the propeller, or propeller pitch control mechanism. This may make certification more straightforward. On the other hand, the parameter pair 1 provides for more direct control of propeller pitch. By removing the constant speed governor, this may also remove transient performance limitations caused by the hydro-mechanical dynamics from the constant speed governor (e.g. slower response due to inertia of counter-weights).

Once a target parameter pair is derived, either from the propulsion system model or the lookup table, the controller then controls the actual parameters, such that errors between the target values and a measured or estimated parameter pair are minimised. In one example, this is achieved using a closed loop conventional Proportional, Integral, Derivative (PID) controller. Alternative control methodologies such as open-loop model-based control may alternatively be used. Optionally, additional propulsion system component efficiencies may be considered by the controller when determining an optimum propulsion system configuration. For example, the efficiency of the inverter may be considered.

The optimum values for the target parameter pairs can be calculated online by the controller using a propulsion system model, or offline and stored in a lookup table. In either case, the optimum values are calculated by consideration of the airframe drag and component efficiencies of the propulsion system, and an optimum target parameter pair can then be calculated for a desired thrust level for a given airspeed.

Referring again to figure 2, each of the inverter 24, motor, 10 and propeller 12 have respective efficiencies, which will necessarily be less than 100% in each case. For example, the inverter will have an efficiency $\eta_I$ defined by the AC electrical output power in watts divided by the DC electrical input power in watts. Efficiencies below 100% represent thermal losses. This efficiency is typically a function of AC output frequency f and load P. Similarly, the motor will have an efficiency $\eta_m$, defined by the useful mechanical output power in watts, divided by the electric input power in watts. This efficiency is typically a function of motor speed $\Omega_m$ and torque $\tau_m$ for a given motor output power. Since the motor speed $\Omega_m$ is tied to inverter output frequency f, these components do not have separate degrees of freedom, and so the two components can be combined to define a single motor / inverter efficiency metric when considering their efficiencies.

Similarly, the propeller 12 will have an efficiency $\eta_p$, defined by the useful mechanical output power (thrust) in watts, divided by the mechanical input power in watts. This efficiency is typically a function of rotational speed $\Omega_p$ and pitch angle $\beta$ for a given propeller output power. It will be appreciated that, in the case of a directly coupled motor 10 and propeller 12, the propeller rotational speed $\Omega_p$ and motor rotational speed $\Omega_m$ will be equal. Where a gearbox is provided, these speeds will be a fixed multiple of one another, wherein the propeller speed $\Omega_p$ is typically lower than the motor speed $\Omega_m$. The gearbox (where present) also has an efficiency, which may be related to rotational speed. However, since the propeller 12 and gearbox rotate together, these can be treated as a single unit, with a single efficiency metric.

Consequently, each of the inverter 24, propeller 16 and motor 10 have an efficiency profile which varies according to various parameters. Each of these factors must be considered and weighted to find an optimum propulsion system configuration.

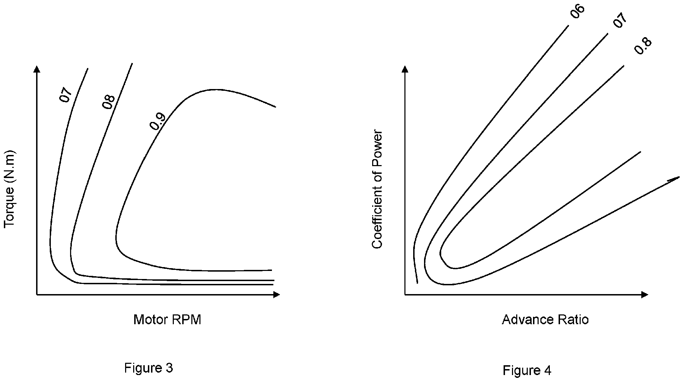

Figure 3 shows an efficiency profile for a combined motor 10 and inverter 24 pair. The efficiency profile comprises a graph showing motor torque $\tau_m$ (which can be measured in newton metres) and motor speed $\Omega_m$ (which can be measured in RPM) and corresponding efficiency isolines (marked as 0.9, 0.8 and 0.7). This data can be determined using computer modelling, or experimental testing. As can be seen, efficiency varies greatly from around 0.7 (i.e. 70% efficiency) at some speeds and torque settings, to 0.9 (i.e. 90%) at others. In principle, a given power can be generated by rotating the motor relatively slowly at a high torque, or relatively quickly at a low torque. However, the efficiency at which this power is produced varies considerably, with a complex relationship between motor speed and torque. In general however, a single torque and speed combination can be defined which provides the necessary power at the highest efficiency.

Figure 4 shows an efficiency profile for a propeller 12 or propeller and gearbox combination. Again, the efficiency profile comprises a graph showing the coefficient of power $C_P$ of the propeller 12 and advance ratio J, and corresponding efficiency isolines (marked as 0.8, 0.7 and 0.6).

The advance ratio *J* is a non-dimensional number given by the following well-known equation:

$$J = \frac{60V_{TAS}}{Nd}$$

Equation 1

Where $V_{TAS}$ is the true airspeed, N is the rotational speed of the propeller in revolutions per minute, and *d* is the diameter of the propeller. An interesting result of this research is that the correct configuration for propulsion system overall maximum efficiency can be calculated from *true airspeed*, rather than indicated airspeed, or any other flight parameter. This is because the propeller efficiency depends on advance ratio, which is a function of the actual relative velocity of airflow over the propeller due to aircraft forward motion (true airspeed), rather than dynamic pressure (indicated airspeed). In some cases, true airspeed may be calculated from equivalent airspeed or any other airspeed which is available using the aircraft air data sensors.

Similarly, the propeller power coefficient $C_P$ is given by the following well-known equation:

$$C_P = \frac{P_{shaft}}{\rho N^3 d^5}$$

Equation 2

Where $P_{shaft}$ is shaft input power, $\rho$ is the fluid density, N is the rotational speed of the propeller in revolutions per second, and d is the diameter of the propulsor.

As can be seen, efficiency varies greatly from around 0.6 (i.e. 60% efficiency) at some advance ratios and coefficients of power, to 0.8 (i.e. 80%) at others. In principle, a given thrust can be generated by rotating the propeller relatively slowly at a high pitch, or relatively quickly at a low pitch. However, the efficiency at which this thrust is produced varies considerably, with a complex relationship between speed and pitch, which is governed by the relationship between the coefficient of power and the advance ratio. In general however, a single (or in some cases two) combination can be found, which provides the necessary thrust at the highest efficiency. Again, this data can be determined using computer modelling such as CFD, or via wind tunnel testing. Note that the data shown in figure 4 is a subset of contours within the full tabulated data for the propeller 12.

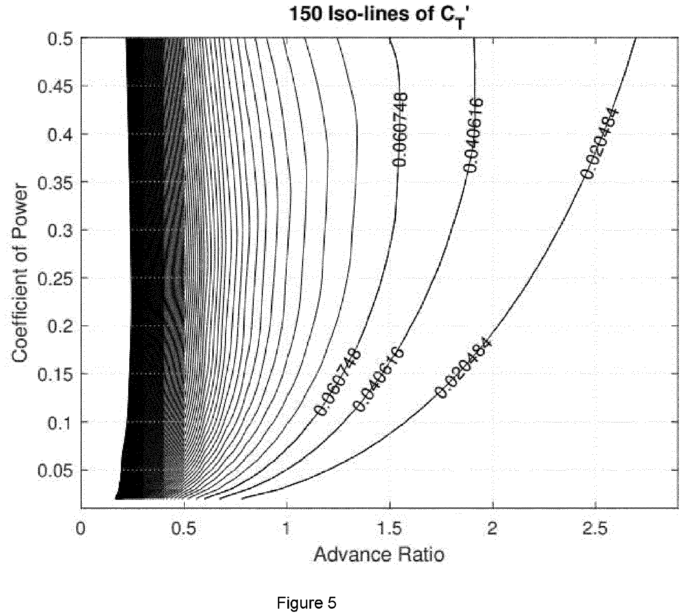

Figure 5 shows a 3-dimensional graph, relating advance ratio *J*, coefficient of power $C_p$ and propeller pitch angle $\beta$ to propeller efficiency. Again, as can be seen, propeller efficiency depends strongly on these parameters, with a maximum achievable efficiency given as around 0.8 in this example, but with efficiencies as low as 0.1 also being possible.

In order to calculate the look-up table or online model defining the most efficient propulsion system configuration for given flight conditions, a set-point generation scheme is defined.

Initially, a modified thrust coefficient $C'_T$ is defined as:

$$C'_T = \eta_p(J, C_p) \frac{C_p(J, \beta)}{J}$$

Equation 3

Where $\eta_p(J, C_p)$ is the propeller map from figure 4, and $C_p(J, \beta)$ is the propeller map from figure 5, but with an inversion of power coefficient and blade angle axes.

This modified thrust coefficient can be related to the airframe's drag coefficient $C_D$ as follows:

$$C'_T = \frac{\pi}{8} C_D \frac{S}{S_{prop}}$$

Equation 4

Where *S* represents the aircraft wing surface area in square meters, $S_{prop}$ represents the total propeller reference area in square meters (i.e. propeller disc area, the area swept by the propellers and $C_D$ represents the coefficient of drag of the aircraft, as conventionally defined.

The drag coefficient at a chosen level flight condition (airspeed and altitude) can be translated to a required modified thrust coefficient. Hence, for a desired true airspeed, the corresponding iso-thrust coefficient line will capture all points on the propeller performance maps that correspond to the chosen flight condition. The following method demonstrates how these iso-lines are used to extract the max overall efficiency points.

For steady-state flight conditions, each iso-line of $C'_T$ corresponds to a constant equivalent airspeed. For simplicity, the following considers sea-level conditions, where equivalent and true airspeed are interchangeable. Since equation 3 provides a map of thrust coefficient over $J$ and $C_P$, the iso-lines of $C'_T$ can be exposed. Each iso-line of $C'_T$ provides all the possible co-ordinates ($J$, $C_P$) that achieve a given airspeed. It is important to point out that every iso-line will be limited by a physical maximum RPM limit $N$ and minimum RPM $N$ due to stall. This will limit the range of advance ratio $J$ values over which the maximum efficiency search can be performed.

In practice therefore, the set-point generation method includes safety parameters or operational limitations which are excluded from outputs of the optimisation method. Consequently, the set-point generation process includes these limitations, such that set-points that results in exceedance of these limitations are included in the look-up table or model in the controller.

Examples include propeller and motor speed limits. At greater than a particular speed, damage may occur to either the motor or the propeller, and so maximum values are set for these parameters. Similarly, the propeller may stall below a particular propeller rotational speed, relative airflow velocity or relative airflow angle (angle of attack - $\alpha$), and so limits are set to prevent this. Similarly, depending on the design of the motor 10, the motor may stall at rotational speed below a critical speed, and so a minimum motor speed is also set.

Other limitations may apply to various components. For example, the motor and / or drivetrain (such as shaft 14 and gearbox where present) typically have a maximum permissible torque, beyond which damage may occur. Consequently, limits are set to avoid set-points that exceed these limits. The motor 10, inverter 24 or energy storage unit 18 may have maximum current limitations, which similarly limit the current that can be drawn. Again, these limitations are included in the model.

Once these limitations are included, the parameter space can be searched to find a combination of parameters which provides a required thrust for given flight conditions.

If only the propeller efficiency were to be considered, the search method could comprise merely finding a single coordinate on the propeller efficiency map where both the safety limitations and thrust requirements are met. However, the inventors have found that such a method may result in low overall propulsion system efficiency in view of the significant variation in inverter and motor efficiency at different operating points. This is particularly the case where the motor is not well matched to the load.

However, by using the fact that a modified thrust coefficient iso-line corresponds to a constant equivalent airspeed, all co-ordinates ($J$, $C_p$) for the iso-line can be translated into equivalent motor speed and torque coordinates; to query the EPU efficiency map, a translation according to equation 5 is performed:

$$(J, C_p) \rightarrow (\Omega(J), \tau_m(J, C_p))$$

<div align="right">Equation 5</div>

The translation is performed using equation (1) re-arranged for N, and the following relationship between torque and power coefficient:

$$\tau_m = \frac{1}{2\pi} \rho C_p \left(\frac{N}{60}\right)^2 d^5$$

<div align="right">Equation 6</div>

This gives a relationship between advance ratio $J$ and coefficient of power $C_p$, and modified coefficient of thrust $C'_t$.

Now, for a given airspeed, the motor efficiency map can be queried along an iso-line knowing the translation (13). Therefore, for each iso-line, the product of propeller and motor efficiency can be found. The maximum overall efficiency is denoted $\eta_0^*$, where the superscript * denotes variables at maximum overall efficiency. The maximum overall efficiency $\eta_0^*$ is defined as:

$$\eta_0^* = \eta_m(\Omega^*, \tau_m^*)\eta_p(J^*, C_p^*)$$

<div align="right">Equation 7</div>

Where $\eta_m(\Omega^*, \tau_m^*)$ is the motor efficiency as a function of motor speed $\Omega$ and motor torque $\tau_m$, and $\eta_p$ is the propeller efficiency as a function of advance ratio $J$ and the power coefficient $C_p$. Once these optimum values are selected, a look-up table on the basis of either parameter pair can then be constructed. Once optimal values for (J,Cp) are found, the pitch angle can be found from querying prop data that relates J,Cp and beta. Such data is typically provided by manufacturers, or can be determined from experimentation.

In some cases, multiple solutions may exist, i.e. there may exist multiple values of motor speed motor speed $\Omega$, motor torque $\tau_m$, advance ratio $J$ and the power coefficient $C_P$ which provide equally high efficiency. In such a case, a suitable coordinate can be chosen using an additional constraint such as a smallest motor or propeller rotational speed or $P_{shaft}$. Alternatively, a value which is closest to the current value may be selected, to avoid "hunting" behaviour by the propulsion system.

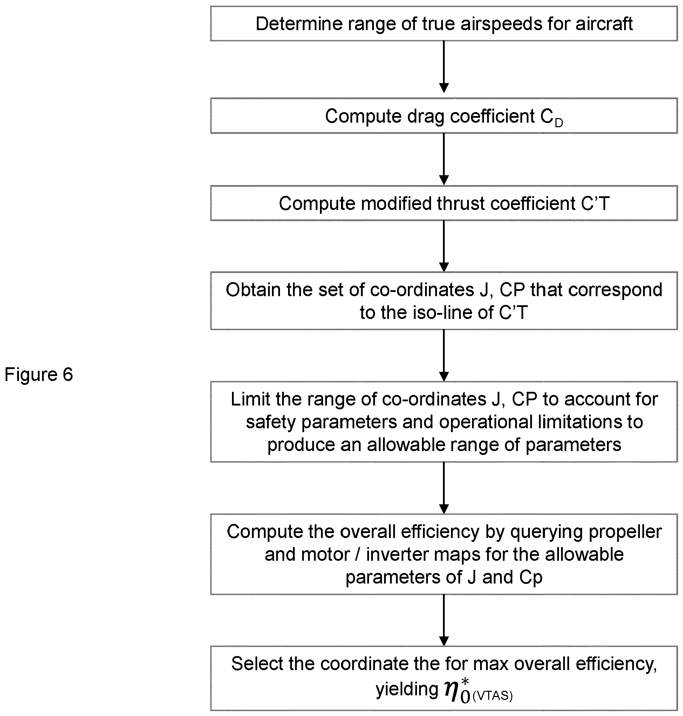

Consequently, a method can be defined for calculating the look-up table or online model, which relates current airspeed and desired thrust to corresponding motor and propulsor configurations which generate a maximum propulsion system efficiency. Such a method is illustrated in the flow diagram in figure 6, and comprises the following steps:

1. Generate a range of steady-state equivalent true airspeeds over which the airframe is to fly at. This can be derived from a consideration of aircraft performance (speed and altitude) capability, which may in turn be determined from parameters such as thrust and drag, as well as likely atmospheric conditions such as temperatures.
2. For each airspeed:

   a. Compute the drag coefficient $C_D$ of the aircraft;
   b. Compute the modified thrust coefficient C'$_T$ (from equation 4);
   c. Obtain the set of co-ordinates $J$, $C_P$ that correspond to the iso-line of C'$_T$, using the map generated from equation 3;
   d. Limit the range of co-ordinates $J$, $C_P$ to account for safety parameters and operational limitations to produce an allowable range of parameters;
   e. Compute the overall efficiency by querying propeller and motor / inverter maps for the allowable parameters of $J$ and $C_p$; and

   f. Select the coordinate (i.e. motor and propulsor parameters) the for max overall efficiency, yielding $\eta_0^*(\text{VTAS})$ .

Consequently, knowing (J*, $C_p^{*'}$ ) for a chosen V$_{TAS}$ gives all of the information to compute the optimal settings for motor torque and constant speed governor set-point, or motor speed and propeller blade angle.

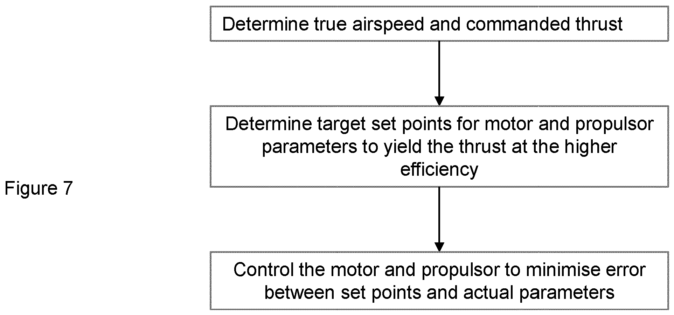

Similarly, figure 7 shows a flow chart illustrating the steps required for control of the aircraft propulsion system in accordance with the above computed parameters:

1. Determine the true airspeed and commanded thrust, through communication with aircraft air data sensors and pilot or autopilot input;
2. Determine target set points for motor and propulsor parameters to yield the thrust at the highest possible propulsion system efficiency, utilising the lookup table generated in accordance with the method shown in figure 6; and
3. Control the propulsion system to minimise error between the set-points and the actual parameters.

By operating the aircraft to this maximum efficient configuration, the aircraft performance is significantly improved. The inventors have found that efficiency improvements of around 2% can be realised by operating the propulsion system in accordance with the above method. Such an improvement is significant in the field of electric aircraft, in view of the large weight and low energy density of electric energy storage systems. For example, a 2% reduction in energy usage may correspond to a greater than 2% increase in range, in view of the logarithmic relationship between aircraft energy storage capacity and resultant range.

Variations of the above described arrangement can be envisaged. For example, the control scheme can be applied to hybrid aircraft, as well as purely electric aircraft.

Parallel and series hybrid aircraft have been proposed, in which one or more internal combustion engine is combined with one or more electric motors to drive one or more propulsors. Parallel hybrid systems can be distinguished from so-called "series hybrid" systems. In a parallel hybrid system, a mechanical connection is provided by the internal combustion engine and at least one propulsor, with at least one electric motor driving either the same propulsor as that driven by the internal combustion engine, or a further propulsor. In a series system, no mechanical link is provided between the internal combustion system and the propulsors.

In such a case, an efficiency map of the gas turbine engine or other internal combustion engine could be considered when determining the maximally efficient operating configuration.

It will be understood that the invention is not limited to the embodiments above-described and various modifications and improvements can be made without departing from the scope of the appended claims.

## Claims

1. A method of controlling an electric propulsion system (5) of an aircraft (1), the propulsion system comprising a rotor governor, an electric motor (10) and a variable pitch rotor (12) configured to be driven by the electric motor, the method comprising:

   determining a commanded thrust setting;
   determining one or more flight parameters;
   determining a corresponding rotor governor speed and electric motor torque set-point which provides the commanded thrust setting at the determined flight parameter having a maximum propulsion system efficiency; and controlling the rotor governor and electric motor in accordance with the determined set-point; wherein the method comprises one of:

   consulting a lookup table which stores the corresponding rotor governor speed and electric motor torque set-point for the determined one or more flight parameters; and
   inputting aircraft characteristics and flight parameters to an aircraft propulsion system model and outputting the corresponding rotor governor speed and electric motor torque set-point.

2. A method according to claim 1, wherein the aircraft propulsion system model comprises one or more of an aircraft drag model, a rotor efficiency model, an electric motor efficiency model, and a power source efficiency model.

3. A method according to any of the preceding claims, wherein the one or more aircraft flight parameters includes one or more of an aircraft true airspeed and aircraft equivalent airspeed.

4. A method according to any of the preceding claims, wherein the method comprises determining a maximum propulsion system efficiency by calculating a minimum electric motor input power corresponding to the commanded thrust setting.

5. A method according to any of the preceding claims, wherein the method comprises determining one or more safety parameters or operational limitations, and outputting the rotor governor speed and electric motor torque set-point which meets these safety parameters or limitations.

6. A method according to claim 5, wherein the method comprises determining one or more of a maximum rotor speed, electric motor torque, maximum rotor input current and maximum energy storage system output current and maintaining the corresponding rotor governor speed and electric motor torque set-point below their respective maxima.

7. A method according to any of the preceding claims, wherein the method comprises determining one or more energy storage system efficiency parameters, and determining the corresponding rotor governor speed and electric motor torque set-point which provides the commanded thrust setting at the determined flight parameter with a maximum propulsion system efficiency.

8. A method according to any of the preceding claims, wherein the method comprises determining one or more power electronics efficiency parameters, and determining the corresponding rotor governor speed and electric motor torque set-point which provides the commanded thrust setting at the determined flight parameter with a maximum propulsion system efficiency.

9. A control system for an aircraft electric propulsion system, the aircraft propulsion system comprising:

   a rotor governor; a variable pitch rotor (12);
   an electric motor (10) coupled to the variable pitch rotor (12);
   the control system comprising:
   a controller configured to carry out the method of any of the preceding claims in order to control the rotor governor, the variable pitch rotor (12) and the electric motor (10).

10. An aircraft propulsion system comprising a control system in accordance with claim 9.

11. An aircraft propulsion system according to claim 10, wherein the aircraft propulsion system comprises one or more energy storage units.

12. An aircraft propulsion system according to claim 10 or claim 11, wherein the aircraft propulsion system comprises one or more internal combustion engines such as one or more gas turbine engines.

13. An aircraft comprising a propulsion system in accordance with any of claims 10 to 12.


**Patentansprüche**

1. Verfahren zum Steuern eines elektrischen Antriebssystems (5) eines Flugzeugs (1), wobei das Antriebssystem einen Rotorregler, einen Elektromotor (10) und einen Rotor (12) mit verstellbarer Neigung, der dazu konfiguriert ist, durch den Elektromotor getrieben zu werden, umfasst,
wobei das Verfahren Folgendes umfasst:

Bestimmen einer befohlenen Schubeinstellung;
Bestimmen eines oder mehrerer Flugparameter;
Bestimmen eines entsprechenden Rotorreglerdrehzahl- und Elektromotordrehmomentsollwerts, der die befohlene Schubeinstellung bei dem bestimmten Flugparameter bereitstellt und eine maximale Antriebssystemeffizienz aufweist; und
Steuern des Rotorreglers und des Elektromotors gemäß dem bestimmten Sollwert;
wobei das Verfahren eines von Folgendem umfasst:

Einsehen einer Nachschlagetabelle, die den entsprechenden Rotorreglerdrehzahl- und Elektromotordrehmomentsollwert für den einen oder die mehreren bestimmten Flugparameter speichert; und
Eingeben von Flugzeugeigenschaften und Flugparametern in ein Flugzeugantriebssystemmodell und Ausgeben des entsprechenden Rotorreglerdrehzahl- und Elektromotordrehmomentsollwerts.

2. Verfahren nach Anspruch 1, wobei das Flugzeugantriebssystemmodell eines oder mehrere von einem Flugzeugluftwiderstandsmodell, einem Rotoreffizienzmodell, einem Elektromotoreffizienzmodell und einem Leistungsquelleneffizienzmodell umfasst.

3. Verfahren nach einem der vorhergehenden Ansprüche, wobei der eine oder die mehreren Flugparameter des Flugzeugs eines oder mehrere von einer wahren Fluggeschwindigkeit des Flugzeugs und einer äquivalenten Fluggeschwindigkeit des Flugzeugs einschließen.

4. Verfahren nach einem der vorhergehenden Ansprüche, wobei das Verfahren Bestimmen einer maximalen Antriebssystemeffizienz durch Berechnen einer minimalen Elektromotoreingangsleistung, die der befohlenen Schubeinstellung entspricht, umfasst.

5. Verfahren nach einem der vorhergehenden Ansprüche, wobei das Verfahren Bestimmen eines/einer oder mehrerer Sicherheitsparameter oder Betriebsbeschränkungen und Ausgeben des Rotorreglerdrehzahl- und Elektromotordrehmomentsollwerts, der diese Sicherheitsparameter oder Beschränkungen erfüllt, umfasst.

6. Verfahren nach Anspruch 5, wobei das Verfahren Bestimmen eines oder mehrerer von einer maximalen Rotordrehzahl, einem Elektromotordrehmoment, einem maximalen Rotoreingangsstrom und einem maximalen Energiespeichersystemausgangsstrom und Halten des entsprechenden Rotorreglerdrehzahl- und Elektromotordrehmomentsollwerts unterhalb seines jeweiligen Maximums umfasst.

7. Verfahren nach einem der vorhergehenden Ansprüche, wobei das Verfahren Bestimmen eines oder mehrerer Energiespeichersystemeffizienzparameter und Bestimmen des entsprechenden Rotorreglerdrehzahl- und Elektromotordrehmomentsollwerts, der die befohlene Schubeinstellung bei dem bestimmten Flugparameter mit einer maximalen Antriebssystemeffizienz bereitstellt, umfasst.

8. Verfahren nach einem der vorhergehenden Ansprüche, wobei das Verfahren Bestimmen eines oder mehrerer Leistungselektronikeffizienzparameter und Bestimmen des entsprechenden Rotorreglerdrehzahl- und Elektromotordrehmomentsollwerts, der die befohlene Schubeinstellung bei dem bestimmten Flugparameter mit einer maximalen Antriebssystemeffizienz bereitstellt, umfasst.

9. Steuersystem für ein elektrisches Flugzeugantriebssystem, wobei das Flugzeugantriebssystem Folgendes umfasst:

   einen Rotorregler;
   einen Rotor (12) mit verstellbarer Neigung;
   einen Elektromotor (10), der an den Rotor (12) mit verstellbarer Neigung gekoppelt ist;
   wobei das Steuersystem Folgendes umfasst:
   eine Steuervorrichtung, die dazu konfiguriert ist, das Verfahren nach einem der vorhergehenden Ansprüche auszuführen, um den Rotorregler, den Rotor (12) mit verstellbarer Neigung und den Elektromotor (10) zu steuern.

10. Flugzeugantriebssystem, das ein Steuersystem gemäß Anspruch 9 umfasst.

11. Flugzeugantriebssystem nach Anspruch 10, wobei das Flugzeugantriebssystem eine oder mehrere Energiespeichereinheiten umfasst.

12. Flugzeugantriebssystem nach Anspruch 10 oder Anspruch 11, wobei das Flugzeugantriebssystem eine oder mehrere Brennkraftmaschinen wie etwa ein oder mehrere Gasturbinentriebwerke umfasst.

13. Flugzeug, das ein Antriebssystem gemäß einem der Ansprüche 10 bis 12 umfasst.

**Revendications**

1. Procédé de commande d'un système de propulsion électrique (5) d'un aéronef (1),

   le système de propulsion comprenant un régulateur de rotor, un moteur électrique (10) et un rotor à pas variable (12) conçu pour être entraîné par le moteur électrique, le
   procédé comprenant :

   la détermination d'un réglage de poussée commandé ;
   la détermination d'un ou plusieurs paramètres de vol ;
   la détermination d'un point de consigne de vitesse de régulateur de rotor et de couple de moteur électrique correspondant qui fournit le réglage de poussée commandé au paramètre de vol déterminé comportant une efficacité maximale de système de propulsion ; et
   la commande du régulateur de rotor et du moteur électrique conformément au point de consigne déterminé ;
   ledit procédé comprenant un parmi :

   une consultation d'une table de recherche qui stocke le point de consigne
   de vitesse de régulateur de rotor
   et de couple de moteur électrique correspondant
   pour le ou les paramètres de vol
   déterminés ; et
   l'entrée de caractéristiques d'aéronef et de paramètres de vol dans un modèle de système de propulsion d'aéronef et l'émission en sortie du point de consigne de vitesse de régulateur de rotor et du couple de moteur électrique correspondant.

2. Procédé selon la revendication 1, ledit modèle de système de propulsion d'aéronef

   comprenant l'un ou plusieurs d'un modèle de traînée d'aéronef, d'un modèle
   d'efficacité de rotor, d'un modèle d'efficacité
   de moteur électrique et d'un modèle d'efficacité de source de puissance.

3. Procédé selon l'une quelconque des revendications précédentes, ledit ou lesdits paramètres de vol d'aéronef comprenant une ou plusieurs parmi une vitesse anémométrique réelle de l'aéronef et une vitesse anémométrique équivalente de l'aéronef.

4. Procédé selon l'une quelconque des revendications précédentes, ledit procédé comprenant la détermination d'une efficacité de système de propulsion maximale en calculant une puissance d'entrée de moteur électrique minimale correspondant au réglage de poussée commandée.

5. Procédé selon l'une quelconque des revendications précédentes, ledit procédé comprenant la détermination d'un ou plusieurs paramètres ou limitations fonctionnelles de sécurité, et l'émission en sortie du point de consigne de vitesse de régulateur de rotor et de couple de moteur électrique qui répond à ces paramètres ou limitations de sécurité.

6. Procédé selon la revendication 5, ledit procédé comprenant la détermination

d'un ou de plusieurs parmi une vitesse de rotor maximale, un couple de moteur électrique, un courant d'entrée de rotor maximal
et un courant de sortie de système de stockage d'énergie maximal et le maintien du point de consigne de vitesse de régulateur de rotor et de couple de moteur électrique correspondant
en dessous de leurs maximums respectifs.

7. Procédé selon l'une quelconque des revendications précédentes, ledit procédé comprenant la détermination d'un ou plusieurs paramètres d'efficacité de système de stockage d'énergie, et la détermination du point de consigne de vitesse de régulateur de rotor et de couple de moteur électrique correspondant
qui fournit le réglage de poussée commandé au paramètre de vol déterminé avec une efficacité du système de propulsion maximale.

8. Procédé selon l'une quelconque des revendications précédentes, ledit procédé comprenant la détermination d'un ou plusieurs paramètres d'efficacité de l'électronique de puissance, et la détermination du point de consigne de vitesse de régulateur de rotor et de couple de moteur électrique correspondant
qui fournit le réglage de poussée commandé au paramètre de vol déterminé avec une efficacité du système de propulsion maximale.

9. Système de commande pour un système de propulsion électrique d'aéronef, le système de propulsion d'aéronef comprenant :

un régulateur de rotor ; un rotor à pas variable (12) ;
un moteur électrique (10) couplé au rotor à pas variable (12) ; le système de commande comprenant :
un dispositif de commande conçu pour réaliser le procédé de l'une quelconque des revendications précédentes afin de commander le régulateur de rotor, le rotor à pas variable (12) et le moteur électrique (10).

10. Système de propulsion d'aéronef comprenant un système de commande conformément à la revendication 9.

11. Système de propulsion d'aéronef selon la revendication 10, ledit système de propulsion d'aéronef comprenant une ou plusieurs unités de stockage d'énergie.

12. Système de propulsion d'aéronef selon la revendication 10 ou la revendication 11, ledit système de propulsion d'aéronef comprenant un ou plusieurs moteurs à combustion interne tels qu'un ou plusieurs moteurs à turbine à gaz.

13. Aéronef comprenant un système de propulsion conformément à l'une quelconque des revendications 10 à 12.

Figure 1

Figure 2

Figure 3

Figure 4

Figure 5

Figure 6

```
┌─────────────────────────────────────────────────┐
│      Determine range of true airspeeds for aircraft      │
└─────────────────────────────────────────────────┘
                         │
                         ▼
┌─────────────────────────────────────────────────┐
│            Compute drag coefficient $C_D$              │
└─────────────────────────────────────────────────┘
                         │
                         ▼
┌─────────────────────────────────────────────────┐
│       Compute modified thrust coefficient C'T         │
└─────────────────────────────────────────────────┘
                         │
                         ▼
┌─────────────────────────────────────────────────┐
│  Obtain the set of co-ordinates J, CP that correspond  │
│                to the iso-line of C'T                   │
└─────────────────────────────────────────────────┘
                         │
                         ▼
┌─────────────────────────────────────────────────┐
│    Limit the range of co-ordinates J, CP to account for │
│   safety parameters and operational limitations to     │
│        produce an allowable range of parameters        │
└─────────────────────────────────────────────────┘
                         │
                         ▼
┌─────────────────────────────────────────────────┐
│  Compute the overall efficiency by querying propeller  │
│      and motor / inverter maps for the allowable       │
│               parameters of J and Cp                   │
└─────────────────────────────────────────────────┘
                         │
                         ▼
┌─────────────────────────────────────────────────┐
│  Select the coordinate the for max overall efficiency,  │
│            yielding $\eta^*_{0\,(VTAS)}$                │
└─────────────────────────────────────────────────┘
```

Figure 7

```
┌─────────────────────────────────────────────┐
│  Determine true airspeed and commanded thrust │
└─────────────────────────────────────────────┘
                        │
                        ▼
┌─────────────────────────────────────────────┐
│  Determine target set points for motor and   │
│    propulsor parameters to yield the thrust   │
│          at the higher efficiency             │
└─────────────────────────────────────────────┘
                        │
                        ▼
┌─────────────────────────────────────────────┐
│  Control the motor and propulsor to minimise  │
│   error between set points and actual         │
│               parameters                      │
└─────────────────────────────────────────────┘
```

**EP 4 166 453 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014158240 A
- US 2020140062 A
- WO 2020240567 A
- US 11128251 B
- EP 2691297 A